(19) Europäisches Patentamt
European Patent Office
Office européen des brevets

(11) **EP 2 343 796 B1**

(12) **EUROPÄISCHE PATENTSCHRIFT**

(45) Veröffentlichungstag und Bekanntmachung des Hinweises auf die Patenterteilung:
**20.03.2013  Patentblatt 2013/12**

(51) Int Cl.:
*H02P 6/06* (2006.01)   *G05F 1/67* (2006.01)
*H02J 7/35* (2006.01)

(21) Anmeldenummer: **10150536.0**

(22) Anmeldetag: **12.01.2010**

(54) **EC-Motor**

EC motor

Moteur EC

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**13.07.2011  Patentblatt 2011/28**

(73) Patentinhaber: **ebm-papst Mulfingen GmbH & Co. KG**
**74673 Mulfingen (DE)**

(72) Erfinder: **König, Daniel, Dipl.-Ing.(FH)**
**74582 Gerabronn (DE)**

(74) Vertreter: **Solf, Alexander**
**Patentanwälte Dr. Solf & Zapf**
**Candidplatz 15**
**81543 München (DE)**

(56) Entgegenhaltungen:
**EP-A2- 0 950 575     DE-A1- 3 519 560**
**DE-C1- 19 538 946     JP-A- 8 331 889**
**JP-A- 11 351 057**

**Beschreibung**

Die vorliegende Erfindung betrifft gemäß dem Oberbegriff des Anspruchs 1 einen EC-Motor, bestehend aus einem elektronisch kommutierten, permanentmagneterregten Gleichstrommotor mit einer vorgeschalteten Kommutierungselektronik, die über einen Zwischenkreis mit einer Zwischenkreis-Gleichspannung versorgt wird.

Derartige EC-Motoren (EC = elektronisch kommutiert) sind hinlänglich bekannt und werden für zahlreiche Anwendungen eingesetzt. Bei einem EC-Motor handelt es sich bekanntlich um einen permanentmagnetisch erregten, schleifringlosen Synchronmotor, der mit einem Rotorpositionssensor versehen ist und über eine Kommutierungselektronik (Steuer- und Leistungselektronik) an einer Gleichspannung betrieben wird. Diese Gleichspannung kann als Zwischenkreis-Gleichspannung durch Gleichrichtung einer Netz-Wechselspannung gewonnen werden. Die Kommutierungselektronik erzeugt aus der Gleichspannung in Abhängigkeit von der Rotorposition eine insbesondere dreiphasige Wechselspannung zur Erzeugung eines Drehfeldes in der Statorwicklung.

EC-Motoren haben viele Vorteile. Durch die rein elektronische, schleifringlose Kommutierung treten weder Bürstengeräusche noch Verschleiß auf. Diese Motoren sind daher wartungsfrei. Dank der elektronischen Steuerung können problemlos Zusatzfunktionen realisiert werden, wie stufenlose Drehzahlregelung, Drehrichtungsumkehr, Sanftanlauf und/oder Blockierschutz. Zur Drehzahl-Einstellung erfolgt in der Regel eine PWM-Taktung mit einstellbarem oder regelbarem Aussteuergrad (Taktverhältnis).

Für manche Anwendungsfälle besteht heute aus wirtschaftlichen und auch umweltpolitischen Gründen vielfach der Wunsch, solche EC-Motoren auch mit Solarenergie, d.h. über Solarzellengeneratoren mit einer Photovoltaik-Spannung zu betreiben.

Beispielsweise beschreibt das Dokument US 5,493,155 A ein elektrisches Versorgungssystem für einen elektrischen Antrieb, z. B. eines Kompressors einer Klimaanlage bzw. einer Kältemaschine, wobei ein Zwischenkreis über einen Netzgleichrichter direkt von einer Netzspannung eines öffentlichen Versorgungsnetzes versorgt wird. Zusätzlich ist ein Solarzellengenerator (solar panel) mit dem Zwischenkreis verbunden, und zwar mittelbar über einen steuerbaren DC/DC-Wandler (converter), über den die variable, sich je nach Sonneneinstrahlung ändernde Photovoltaik-Spannung an die von der gleichgerichteten Netzspannung vorgegebene Zwischenkreis-Gleichspannung angepasst wird. Der im Solarkreis erforderliche DC/DC-Wandler führt aber zu einem zusätzlichen Schaltungs- und Bauteilaufwand sowie zu einem reduzierten Wirkungsgrad der solaren Energie.

Das Dokument DE 195 38 946 C1 beschreibt speziell zur Anwendung in einem Fahrzeug eine Anordnung zur Stromversorgung eines bürstenlosen, elektronisch kommutierten Gleichstrommotors, der dazu in direkter elektrischer Verbindung mit einem Solargenerator steht. Der Solargenerator soll als Solarmodul vorzugsweise im Dachbereich des Fahrzeugs angeordnet sein. Zusätzlich ist der Motor bzw. seine Steuerelektronik über einen Schalter mit dem Fahrzeugbordnetz (Batterie, Lichtmaschine) verbunden, so dass zwischen einem Betrieb mit Solar-Speisung und einem Betrieb mit Speisung aus dem Bordnetz umgeschaltet werden kann. Dies bedeutet, dass der Elektromotor nur alternativ aus dem Solarmodul oder aus dem Bordnetz betrieben werden kann.

Das Dokument JP 08 331 889 A beschreibt einen elektrischen Induktionsmotor, der aus einer "sauberen Energiequelle" betrieben werden. Diese Energiequelle besteht aus einem Solargenerator und einem Windgenerator, wobei der Solargenerator direkt mit einem Wechselrichter (inverter) des Motors verbunden ist. Der Windgenerator ist über einen Wandler (converter) parallel zu dem Solargenerator mit dem Motor-Wechselrichter verbunden. Beide Generatoren sind bezüglich ihrer Parameter variabel, weil wetterabhängig. Eine Ausgangsspannung des Windgenerators wird über den Wandler so geregelt, dass sie der jeweiligen Ausgangsspannung des Solargenerators folgt. Wenn hierbei die Ausgangsspannung der "sauberen Energiequelle" sinkt, wird auch die Motor-Drehzahl reduziert, so dass die Eingangsspannung des Induktionsmotors reduziert werden kann. Dies hat eine Änderung der Leistungsaufnahme zur Folge.

Der vorliegenden Erfindung liegt die Aufgabe zu Grunde, einen EC-Motor der genannten Art zu schaffen, der mit gutem Wirkungsgrad und geringem Bauteilaufwand sowie mit konstanter Drehzahl wahlweise mit einer Photovoltaik-Spannung eines Solarzellengenerators und/oder mit einer Netzspannung betrieben werden kann.

Erfindungsgemäß wird dies durch die Merkmale des Anspruchs 1 erreicht. Vorteilhafte Ausgestaltungsmerkmale der Erfindung sind in den abhängigen Ansprüchen sowie der folgenden Beschreibung enthalten.

Demnach ist erfindungsgemäß vorgesehen, dass der Zwischenkreis einerseits über einen ersten Spannungseingang direkt mit einem Solarzellengenerator sowie andererseits über ein steuerbares Netzteil und einen zweiten Spannungseingang mit einer Netzspannung verbindbar ist, wobei die Zwischenkreis-Gleichspannung variabel anhand einer jeweils vorliegenden Photovoltaik-Spannung des Solarzellengenerators vorgegeben wird und das Netzteil bezüglich seiner Ausgangsspannung zur Anpassung an die jeweilige Zwischenkreis-Gleichspannung regelbar ist.

Durch diese Spannungsanpassung können vorteilhafterweise die aus den jeweiligen Spannungen resultierenden Ströme einfach in einem Schaltungspunkt zusammengeführt und somit praktisch zu dem Zwischenkreisstrom addiert werden. Der Motor wird dann mit der Leistung betrieben, die sich aus dem jeweiligen Produkt Zwischenkreisstrom mal Zwischenkreis-Gleichspannung ergibt.

Erfindungsgemäß wird das Netzteil über einen MPP-Regler im Bereich der maximal möglichen Leistung des Solarzellengenerators geregelt (MPP = maximum power point). Über den MPP-Regler (MPP-Tracker) kann der Solarzellengenerator stets im optimalen Leistungsbereich betrieben werden.

Um den Betrieb des EC-Motors auch dann zu gewährleisten, wenn keine oder eine zu geringe Photovoltaik-Spannung zur Verfügung steht, kann in weiterer vorteilhafter Ausgestaltung vorgesehen sein, dass bei ausfallender oder gegen Null gehender, einen bestimmten Grenzwert unterschreitender Photovoltaik-Spannung über das Netzteil ein vorbestimmter, für den Betrieb des Gleichstrommotors noch ausreichender Wert für die Zwischenkreis-Gleichspannung eingestellt wird.

Im Zusammenhang mit der Erfindung ist weiterhin vorgesehen, dass die Kommutierungselektronik eine Drehzahl-Regelung aufweist, um die Motordrehzahl auch bei variierender Zwischenkreis-Gleichspannung konstant halten zu können. Dabei besteht die Kommutierungselektronik in an sich bekannter Weise aus einer Leistungs-Endstufe mit gesteuerten, in einer Vollbrückenschaltung angeordneten Leistungsschaltern und einer zugehörigen Steuereinheit, die die Leistungsschalter in Abhängigkeit von der Rotordrehstellung ansteuert.

In bevorzugter Ausgestaltung bildet die Kommutierungselektronik zusammen mit dem steuerbaren Netzteil und dem MPP-Regler eine in ein Motorgehäuse integrierte Elektronikeinheit, die insbesondere auf mindestens einer gemeinsamen Schaltungsplatine untergebracht ist. Dabei ist das Netzteil bevorzugt als AC/DC-Schaltnetzteil ausgebildet, welches bevorzugt einen integrierten Spannungsregler aufweist.

Anhand der Zeichnung soll im Folgenden ein bevorzugtes Ausführungsbeispiel der Erfindung genauer erläutert werden. Dabei zeigen:

Fig. 1    ein Blockschaltbild des erfindungsgemäßen EC-Motors,

Fig. 2    einen vereinfachten Prinzip-Schaltplan des erfindungsgemäßen EC-Motors,

Fig. 3    ein prinzipielles Kennlinien-Diagramm einer Solarzelle,

Fig. 4    ein Diagramm zur Erläuterung des Zusammenhangs zwischen Solarzellenspannung und Motoraussteuergrad und

Fig. 5    ein Diagramm mit Veranschaulichung der zusammengesetzten Gesamtleistung.

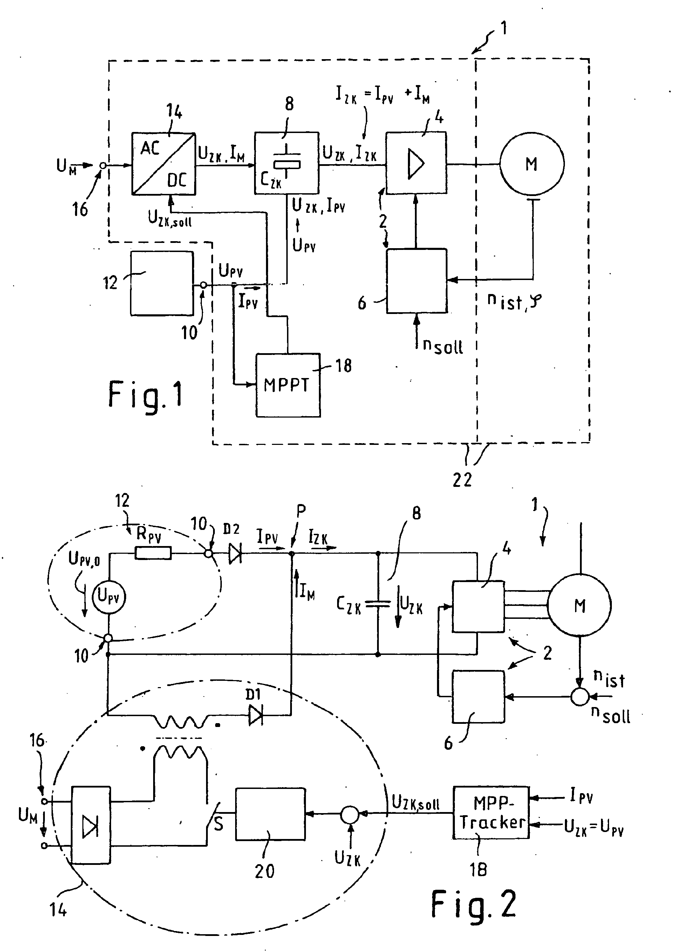

Wie sich zunächst aus Fig. 1 ergibt, besteht ein erfindungsgemäßer EC-Motor 1 aus einem elektronisch kommutierten, permanentmagneterregten Gleichstrommotor M mit einer vorgeschalteten Kommutierungselektronik 2. Die Kommutierungselektronik 2 besteht ihrerseits aus einer Leistungs-Endstufe 4 mit nicht im Einzelnen dargestellten, gesteuerten, in einer Vollbrückenschaltung angeordneten Leistungsschaltern (insbesondere Transistoren) sowie einer zugehörigen Steuereinheit 6 mit Drehzahlregelung. Der Motor M wird über die Endstufe 4 über einen Zwischenkreis 8 mit einer Zwischenkreis-Gleichspannung $U_{ZK}$ versorgt.

In der Steuereinheit 6 ist neben der Drehzahlregelung auch die übliche Kommutierungslogik zur Ansteuerung der Endstufe 4 impliziert. Über die Drehzahlregelung steuert die Steuereinheit 6 über einen so genannten Aussteuergrad die Energie am Motor M pulsweitenmoduliert so nach, dass die Drehzahl, die anhand eines Sollwertes $n_{soll}$ vorgegeben wird, erreicht und dann gehalten wird.

Erfindungsgemäß ist der Zwischenkreis 8 einerseits über einen ersten Spannungseingang 10 direkt mit einem Solarzellengenerator 12 sowie andererseits über ein steuerbares Netzteil 14 und einen zweiten Spannungseingang 16 mit einer Netzspannung $U_M$ (M = mains) verbunden bzw. verbindbar. Somit wird erfindungsgemäß die Zwischenkreis-Gleichspannung $U_{ZK}$ variabel anhand einer jeweils vorliegenden Photovoltaik-Spannung $U_{PV}$ des Solarzellengenerators 12 vorgegeben, und das Netzteil 14 ist bezüglich seiner Ausgangsspannung zur Anpassung an die jeweilige Zwischenkreis-Gleichspannung $U_{ZK}$ regelbar. Durch diese Spannungsanpassung können vorteilhafterweise die aus den jeweiligen Spannungen resultierenden Ströme (Solarstrom $I_{PV}$, Netzstrom $I_M$) einfach in einem Schaltungspunkt P (siehe Fig. 2) zusammengeführt und somit praktisch zu dem Zwischenkreisstrom $I_{ZK}$ addiert werden; es gilt $I_{ZK} = I_{PV} + I_M$. Der Motor M wird dann mit der Leistung betrieben, die sich aus dem jeweiligen Produkt Zwischenkreisstrom mal Zwischenkreis-Gleichspannung ergibt; $P = I_{ZK} \cdot U_{ZK}$.

In bevorzugter Ausgestaltung wird das Netzteil 14 über einen MPP-Regler 18 im Bereich der maximal möglichen Leistung des Solarzellengenerators 12 geregelt. Dazu werden dem MPP-Regler 18 die jeweiligen Werte des Solarstroms $I_{PV}$ und der Solarspannung $U_{PV}$ zugeführt. Anhand dieser Werte bildet der MPP-Regler 18 einen Sollwert $U_{ZKsoll}$, der dem Netzteil 14 zur Einstellung der entsprechenden Zwischenkreis-Gleichspannung $U_{ZK}$ zugeführt wird.

Für den Fall, dass die Photovoltaik-Spannung $U_{PV}$ ganz ausfallen oder gegen Null gehend einen bestimmten Grenzwert unterschreiten sollte, wird über das Netzteil 14 ein vorbestimmter, für den Betrieb des Motors M noch ausreichender Wert $U_{ZKmin}$ für die Zwischenkreis-Gleichspannung eingestellt.

In bevorzugter Ausgestaltung ist das Netzteil 14 als AC/DC-Schaltnetzteil ausgebildet. Gemäß Fig. 2 enthält das Netzteil 14 einen integrierten Spannungsregler 20.

Wie beispielhaft in Fig. 1 veranschaulicht ist, bildet die Kommutierungselektronik 2 zusammen mit dem Netzteil 14, einem Zwischenkreis-Kondensator $C_{ZK}$ des Zwischenkreises 8 und vorzugsweise auch dem MPP-Regler 18 eine Elektronikeinheit, die bevorzugt auf mindestens einer gemeinsamen Schaltungsplatine angeordnet und in ein Motorgehäuse integriert ist. Auf diese Weise lässt sich der EC-Motor 1 mit allen erforderlichen Komponenten kompakt aufbauen, wobei über die zwei Spannungseingänge 10 und 16 wahlweise die jeweiligen Spannungen, d. h. die Netzspannung $U_M$ und/oder der Solarzellengenerator 12 angeschlossen werden können. Das Motorgehäuse ist in Fig. 1 durch eine gestrichelte Linie 22 angedeutet.

Das so genannte MPP-Tracking ist in der Photovoltaiktechnik ein an sich bekanntes Verfahren, um Solarzellen im optimalen Leistungsbereich zu betreiben (MPP = maximum power point). Bei gleichbleibendem Motor-Arbeitspunkt variiert der MPP-Regler 18 die Zwischenkreis-Gleichspannung über das Netzteil 14 so, dass die jeweils maximal zur Verfügung stehende Energie dem Solarzellengenerator 12 entnommen wird. Somit ist die Zwischenkreis-Gleichspannung abhängig vom Arbeitspunkt der Solarzelle, der seinerseits von der solaren Einstrahlung und der Modultemperatur abhängt.

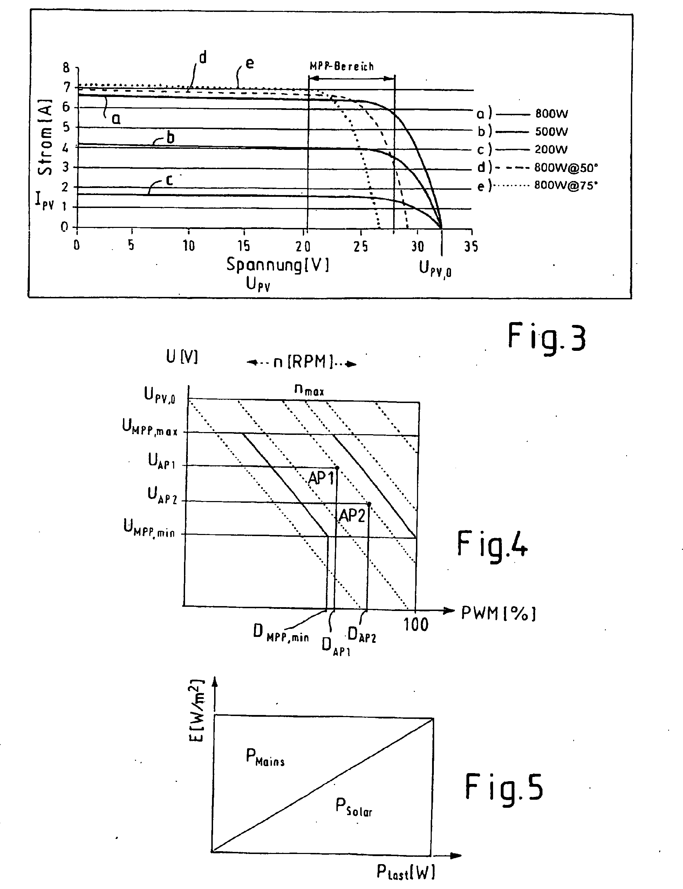

Hierzu wird auf das Diagramm in Fig. 3 verwiesen, in dem beispielhaft einige Kennlinien dargestellt sind. Der optimale Leistungsbereich ist als MPP-Bereich eingezeichnet.

Der erfindungsgemäße EC-Motor 1 kann grundsätzlich in drei verschiedenen Betriebsmodi arbeiten:

1. Reine Netzanbindung, wobei die erforderliche Energie zu 100 % aus dem Netz zugeführt wird.

2. Reine Solaranbindung ohne zusätzliche Netzversorgung; hierbei können zwei Unterfälle auftreten:

- Der Solarzellengenerator 12 liefert mehr Energie als der Motor benötigt. Hierbei kann der Solarzellengenerator 12 auch außerhalb des MPP-Bereiches betrieben werden. Die Spannung wird entsprechend der Kennlinie heruntergeregelt.

- Die Energie des Solarzellengenerators 12 reicht auch im MPP-Bereich nicht aus, um den eigentlich erforderlichen Sollwert zu erreichen. Da oder wenn keine zusätzliche Netzversorgung vorhanden ist, wird folglich nur die maximal mögliche Energie des Solarzellengenerators 12 zum Motorbetrieb verwendet.

3. Bivalenter Betrieb mit gleichzeitiger Solar- und Netzversorgung; auch hierbei treten zwei Unterfälle auf:

- Die Energie des Solarzellengenerators 12 reicht nicht aus, um den Sollwert zu erreichen. In diesem Fall wird die zusätzlich benötigte Energie aus dem Netz entnommen, wobei der Solarzellengenerator 12 aber jedenfalls im MPP-Bereich betrieben wird.

- Die Solar-Energie reicht aus, um den Sollwert zu erreichen. Hierbei kann ohne Netzzuspeisung der Solarzellengenerator 12 außerhalb des MPP-Bereiches betrieben werden.

Somit wird Energie aus dem Netz nur dann zugeführt, wenn die Energie aus dem Solarzellengenerator 12 nicht ausreicht, um den jeweils gewünschten Motor-Arbeitspunkt zu erreichen. Dabei wird vorteilhafterweise aber nur der Teil an Energie aus dem Netz entnommen, den der Solarzellengenerator 12 nicht liefern kann, um den Motor ausreichend zu versorgen.

Falls aus dem Solarzellengenerator 12 überschüssige Energie zur Verfügung steht, kann diese ungenutzt bleiben, vorzugsweise kann sie aber auch in das Netz zurückgespeist werden. Dazu können in Fig. 1 und 2 nicht dargestellte Mittel zur Netz-Rückspeisung von überschüssiger Energie aus dem Zwischenkreis 8 vorgesehen sein. Dazu wird die Zwischenkreis-Gleichspannung $U_{ZK}$ überwacht und bei Überschreiten eines vorbestimmten Grenzwertes wird über das - dazu bidirektional Ausgebildete - Netzteil 14 Energie ins Netz zurückgespeist.

Eine prinzipielle Schaltung des erfindungsgemäßen, direkt-solargespeisten EC-Motors 1 ist in Fig. 2 dargestellt. Durch die Regelung des Netzteils 14 (AC/DC-Wandlers) auf eine jeweils konstante Spannung ist dessen Innenwiderstand annähernd Null, wobei der Wandler nur im Ein-Quadranten-Betrieb arbeitet. Dagegen besitzt der Solarzellengenerator 12 im Vergleich einen relativ großen Innenwiderstand $R_{PV}$. Werden die beiden Spannungen (Ausgangsspannung des Netzteils 14 und Photovoltaik-Spannung des Solarzellengenerators 12) mit den unterschiedlichen Innenwiderständen parallel geschaltet, stellt sich je nach Arbeitspunkt des Solarzellengenerators (abhängig von Bestrahlung, Temperatur, siehe Fig. 3) selbsttätig jeweils ein Stromwert von dem Solarzellengenerator und aus dem Netzteil ein. Diese Einzelströme addieren sich im Schaltungspunkt P zu dem Zwischenkreisstrom $I_{ZK}$ des Motors M. Somit kann über die Variation des jeweiligen Spannungspotenzials im Zwischenkreis 8 die Leistungsabgabe des Solarzellengenerators 12 geregelt werden. Es gilt $P_{Motor} = P_{Solar} + P_{Netz} = U_{ZK} \cdot I_{PV} + U_{ZK} \cdot I_M$.

Alternativ kann das Netzteil 14 auch in einem Konstantstrom-Modus betrieben werden. Die Spannung im Zwischenkreis ergäbe sich dann mit:

$$U_{ZK} = \frac{1}{c_{ZK}} \cdot \int (i_{PV} + i_M - i_{ZK}) \, dt$$

Dabei muss die Summe beider Ströme in einem definierten Arbeitspunkt über den MPP-Regler 18 konstant gehalten werden.

Die Fig. 4 zeigt als rautenförmige Fläche den Arbeitsbereich des MPP-Reglers 18 zwischen $U_{MPPmin}$ und $U_{MPPmax}$. Mit schrägen gestrichelten Linien sind Drehzahlkurven angedeutet, wobei jede dieser Linien eine bestimmte Drehzahl darstellt. Ein Arbeitspunkt 1 (AP 1) entspricht dem MPP der Solarzelle bei definierten Betriebsparametern. Ändern sich die Betriebsparameter, könnte entsprechend beispielsweise der AP 2 erreicht werden. Dieser AP 2 zeichnet sich durch eine niedrigere MPP-Spannung aus. Um den Motorarbeitspunkt durch diese veränderten Solarzellenparameter nicht zu verändern, muss über die Steuereinheit der Kommutierungselektronik 2 der Aussteuergrad des Motors erhöht werden. Der Motorarbeitspunkt wird anwendungsspezifisch mit einer stationären Drehzahl und damit einer konstanten Leistungsaufnahme und Leistungsabgabe vorgegeben. Der jeweils aktuelle Aussteuergrad berechnet sich zu:

$$D_{AP1} = \frac{U_{MPPmin}}{U_{MPPaktuell}} \cdot 100\%$$

Schließlich zeigt die Fig. 5 noch die Zusammensetzung der Gesamtleistung des Motors in Abhängigkeit von der Beleuchtungseinstrahlung der Sonne auf das Solarpanel des Solarzellengenerators 12. In dieser Grafik ist beispielhaft die Leistung der Solarzelle auf die Leistung des Motors angepasst. Dies wäre aber für die Funktionsweise nicht zwingend notwendig.

Variationen und Modifikationen sind möglich im Rahmen der angehängten Ansprüche.

**Patentansprüche**

1. EC-Motor (1), bestehend aus einem elektronisch kommutierten, permanenterregten Gleichstrommotor (M) mit einer vorgeschalteten Kommutierungselektronik (2), die über einen Zwischenkreis (8) mit einer Zwischenkreis-Gleichspannung ($U_{ZK}$) versorgt wird,
   **dadurch gekennzeichnet, dass** der Zwischenkreis (8) einerseits über einen ersten Spannungseingang (10) direkt mit einem Solarzellengenerator (12) sowie andererseits über ein steuerbares Netzteil (14) und einen zweiten Spannungseingang (16) mit einer Netzspannung ($U_M$) verbindbar ist, wobei die Zwischenkreis-Gleichspannung ($U_{ZK}$) variabel anhand einer jeweils vorliegenden Photovolfaik-Spannung ($U_{PV}$) des Solarzellengenerators (12) vorgegeben wird und das Netzteil (14) bezüglich seiner Ausgangsspannung zur Anpassung an die jeweilige Zwischenkreis-Gleichspannung ($U_{ZK}$) über einen MPP-Regler (18) im Bereich der maximal möglichen Leistung des Solarzellengenerators (12) regelbar ist, wobei ein Motorarbeitspunkt (AP) mit einem Drehzahl-Sollwert ($n_{soll}$) vorgegeben und bei sich ändernden Solarzellen-Parametern derart über die Kommutierungselektronik (2) angepasst wird, dass die Motor-Drehzahl auf dem Sollwert ($n_{soll}$) gehalten wird.

2. EC-Motor nach Anspruch 1,
   **dadurch gekennzeichnet, dass** bei ausfallender oder gegen Null gehender, einen bestimmten Grenzwert unterschreitender Photovoltaik-Spannung ($U_{PV}$) über das Netzteil (14) ein vorbestimmter, für den Betrieb des Gleichstrommotors (M) ausreichender Wert ($U_{ZKmin}$) für die Zwischenkreis-Gleichspannung ($U_{ZK}$) eingestellt wird.

3. EC-Motor nach Anspruch 1 oder 2,
   **dadurch gekennzeichnet, dass** die Kommutierungselektronik (2) aus einer Leistungs-Endstufe (4) und einer zugehörigen Steuereinheit (6) mit Drehzahlregelung besteht.

4. EC-Motor nach einem der Ansprüche 1 bis 3,
   **dadurch gekennzeichnet, dass** die Kommutierungselektronik (2) zusammen mit dem Netzteil (14) und dem MPP-Regler (18) eine in ein Motorgehäuse integrierte, insbesondere auf mindestens einer gemeinsamen Schaltungsplatine angeordnete Elektronikeinheit bildet.

5. EC-Motor nach einem der Ansprüche 1 bis 4,
   **dadurch gekennzeichnet, dass** der Zwischenkreis (8) einen Zwischenkreis-Kondensator ($C_{ZK}$) enthält.

6. EC-Motor nach einem der Ansprüche 1 bis 5,
   **dadurch gekennzeichnet, dass** das Netzteil (14) als AC/DC-Schaltnetzteil - vorzugsweise mit integriertem Spannungsregler (20) - ausgebildet ist.

7. EC-Motor nach einem der Ansprüche 1 bis 6,
   **gekennzeichnet durch** Mittel zur Netz-Rückspeisung von überschüssiger Energie aus dem Zwischenkreis (8), wobei die Zwischenkreis-Gleichspannung ($U_{ZK}$) überwacht und bei Überschreiten eines vorbestimmten Grenzwertes über das - dazu bidirektional ausgebildete - Netzteil (14) Energie ins Netz zurückgespeist wird.

**Claims**

1. EC motor (1), comprising an electronically commutated, permanent magnet-excited DC motor (M) with upstream commutation electronics (2) supplied with a DC link voltage ($U_{ZK}$) via a DC link (8), **characterised in that** the DC link (8) is connectable, on the one hand, directly to a solar cell generator (12) via a first voltage input (10) and, on the other hand, via a controllable power supply unit (14) and a second voltage input (16) to a mains voltage ($U_M$), the DC link voltage ($U_{ZK}$) being variably specified based on a respective photovoltaic voltage ($U_{PV}$) available from the solar cell generator (12), and the power supply unit (14) being regulable, with respect to its output voltage to adapt to the respective DC link voltage ($U_{ZK}$), via an MPP regulator (18) in the range of the maximum possible power of the solar cell generator (12), a motor operating point (AP) being specified with a rotational speed target value ($n_{target}$) and in case of varying solar cell parameters being adapted via the commutation electronics in such a manner that the motor rotational speed is kept at the target value ($n_{target}$).

2. EC motor according to Claim 1, **characterised in that**, in case the photovoltaic voltage ($U_{PV}$) is absent or falls below a defined limit value approaching zero, a predetermined value ($U_{ZKmin}$) that is sufficient to operate the DC motor (M) is adjusted for the DC link voltage ($U_{ZK}$) by means of the power supply unit (14).

3. EC motor according to Claim 1 or 2, **characterised in that** the commutation electronics (2) comprise a power output stage (4) and an associated control unit (6) with rotational speed regulation.

4. EC motor according to one of Claims 1 to 3, **characterised in that** the commutation electronics (2), together with the power supply unit (14) and the MPP regulator (18), form an electronics unit which is integrated into a motor housing and arranged in particular on at least one common circuit board.

5. EC motor according to one of Claims 1 to 4, **characterised in that** the DC link (8) contains a DC link capacitor ($C_{ZK}$).

6. EC motor according to one of Claims 1 to 5, **characterised in that** the power supply unit (14) is designed as an AC/DC switching power supply unit - preferably with an integrated voltage regulator (20).

7. EC motor according to one of Claims 1 to 6, **characterised by** means for feeding back excess energy from the DC link (8) into the mains, wherein the DC link voltage ($U_{ZK}$) is monitored, and in case a predetermined limit value is exceeded, is fed back into the mains via the power supply unit (14) - configured bidirectionally for this purpose.

## Revendications

1. Moteur EC (1), composé d'un moteur à courant continu (M) excité en permanence à commutation électronique comportant un système électronique de commutation (2) placé en amont qui est alimenté en tension continue de circuit intermédiaire ($U_{ZK}$) par le biais d'un circuit intermédiaire (8),
**caractérisé en ce que** le circuit intermédiaire (8) peut être raccordé directement à un générateur électrique solaire à cellules photovoltaïques (12) d'un côté par le biais d'une première entrée de tension (10) et de l'autre côté par le biais d'un bloc d'alimentation (14) réglable et une deuxième entrée de tension (16) peut être reliée à une tension de réseau ($U_M$), dans lequel la tension continue de circuit intermédiaire ($U_{ZK}$) est prédéfinie de façon variable à l'aide d'une tension photovoltaïque ($U_{PV}$) respectivement en présence du générateur photovoltaïque (12) et le bloc d'alimentation (14) est réglable en ce qui concerne sa tension de sortie dans la plage de la puissance maximale possible du générateur photovoltaïque (12) par le biais d'un régulateur MPP (18) pour s'adapter à la tension continue de circuit intermédiaire ($U_{ZK}$) respective, dans lequel un point de fonctionnement du moteur (AP) est prédéfini avec une valeur de consigne de la vitesse de rotation ($n_{soll}$) et adapté en cas de modification des paramètres des cellules photovoltaïques par le biais du système électronique de commutation (2) de telle sorte que la vitesse de rotation du moteur est maintenue à la valeur de consigne ($n_{soll}$).

2. Moteur EC selon la revendication 1, **caractérisé en ce que** lorsque la tension photovoltaïque ($U_{PV}$) passe sous une certaine valeur limite, fait défaut ou tend vers zéro, une valeur ($U_{ZKmin}$) prédéfinie, suffisante au fonctionnement du moteur à courant continu (M) est réglée pour la tension continue de circuit intermédiaire ($U_{ZK}$) par le biais du bloc d'alimentation (14).

3. Moteur EC selon la revendication 1 ou 2, **caractérisé en ce que** le système électronique de commutation (2) se compose d'un étage final de puissance (4) et d'une unité de commande (6) associée avec régulation de vitesse de rotation.

4. Moteur EC selon l'une quelconque des revendications 1 à 3, **caractérisé en ce que** le système électronique de commutation (2) forme conjointement avec le bloc d'alimentation (14) et le régulateur MPP (18), une unité électronique intégrée dans un carter de moteur, en particulier disposée sur au moins une carte de circuit imprimé commune.

5. Moteur EC selon l'une quelconque des revendications 1 à 4, **caractérisé en ce que** le circuit intermédiaire (8) comporte un condensateur de circuit intermédiaire ($C_{ZK}$).

6. Moteur EC selon l'une quelconque des revendications 1 à 5, **caractérisé en ce que** le bloc d'alimentation (14) est réalisé sous la forme d'un bloc d'alimentation AC/DC, de préférence avec régulateur de tension (20) intégré.

7. Moteur EC selon l'une quelconque des revendications 1 à 6, **caractérisé par** des moyens de réinjection de l'énergie excédentaire du circuit intermédiaire (8) dans le réseau, dans lequel la tension continue de circuit intermédiaire ($U_{ZK}$) est surveillée et en cas de dépassement d'une valeur limite prédéfinie, l'énergie est réinjectée dans le réseau par le biais du bloc d'alimentation (14), réalisé de manière bidirectionnelle à cet effet.

Fig.1

Fig.2

Fig.3

Fig.4

Fig.5

**IN DER BESCHREIBUNG AUFGEFÜHRTE DOKUMENTE**

**In der Beschreibung aufgeführte Patentdokumente**

- US 5493155 A
- DE 19538946 C1
- JP 08331889 A